# EUROPEAN PATENT SPECIFICATION

(11) **EP 2 379 929 B1**
(45) Date of publication and mention of the grant of the patent: **25.03.2015**
(21) Application number: 09787630.4
(22) Date of filing: 16.01.2009
(51) Int. Cl.: F16L 37/092, F16L 37/091

(54) **FITTING WITH A PROTECTION ELEMENT**
FITTING MIT SCHUTZELEMENT
RACCORD AVEC UN ÉLÉMENT DE PROTECTION

(43) Date of publication of application: 26.10.2011
(73) Proprietor: Camozzi S.p.A. Societa' Unipersonale, 25126 Brescia (IT)
(72) Inventor: CAMOZZI, Giovanni, 25065 Lumezzane Brescia (IT); GNUTTI, Gianluca, 25065 Lumezzane Brescia (IT)
(74) Representative: Chimini, Francesco
(86) International application number: PCT/IT2009/000015
(87) International publication number: WO 2010/082222

(56) References cited:
- EP-A- 0 247 214
- EP-A- 0 558 350
- WO-A-97/03314
- DE-U1- 29 704 444

## Description

The present invention relates to a pipe fitting, in particular for braking systems.

A pipe fitting according to the preamble of claim 1 is known from WO97/03314A. Further such fittings, known as rapid or super rapid fittings, are also disclosed in EP0247214, DE29704444U1 and EP0558350.

In the braking system industry, in particular for heavy vehicles, for safety reasons, a pipe is required not to be extracted from a fitting except by an authorised person. Consequently such fittings have a pipe locking element which, instead of being operated by hand, as in the case of traditional fittings, is a specific part that can only be operated by means of a tool at the disposal of authorised personnel.

Another prevailing requirement in the industry of fittings for braking systems, in order to ensure the fitting performs at its best in all operating conditions, is to avoid the introduction of external agents, in particular oil, dust and dirt, inside the fitting itself, especially at the time of insertion of the pipe which, being exposed to such external agents, acts as a vehicle for insinuation in the fitting.

Object of the present invention is to propose a fitting that allows fulfilling such high-safety requirements but which at the same time uses traditional parts or in any case parts that are easy to manufacture.

Such object is achieved with a fitting according to claim 1.

The dependent claims describe advantageous or preferred embodiments of the fitting according to the invention.

Further characteristics and advantages of the fitting will result from the description of various embodiments with reference to the attached figures in which:
- figure 1 shows an exploded view of a fitting not according to the invention, in a first embodiment;
- figure 2 shows the same exploded, but axial section view;
-figure 3 shows the assembled fitting in partial axial section view;
- figure 4 shows the fitting, in section view, with an inserted pipe and a release device in non-operative position;
- figure 4a shows an enlarged detail of the figure 4;
- figure 5 shows a section view of the fitting, with an inserted pipe and the release device in pipe release operating position;
- figure 6 shows an exploded view of a fitting according to the invention;
- figure 7 shows the same exploded, but axial section view;
- figure 8 shows the assembled fitting in partial axial section view;
- figure 9 shows a section view of the fitting with inserted pipe and a release device in non-operative position;
figure 9a shows an enlarged detail of the figure 9; and
- figure 10 shows a section view of the fitting with an inserted pipe and the release device in pipe release operating position.

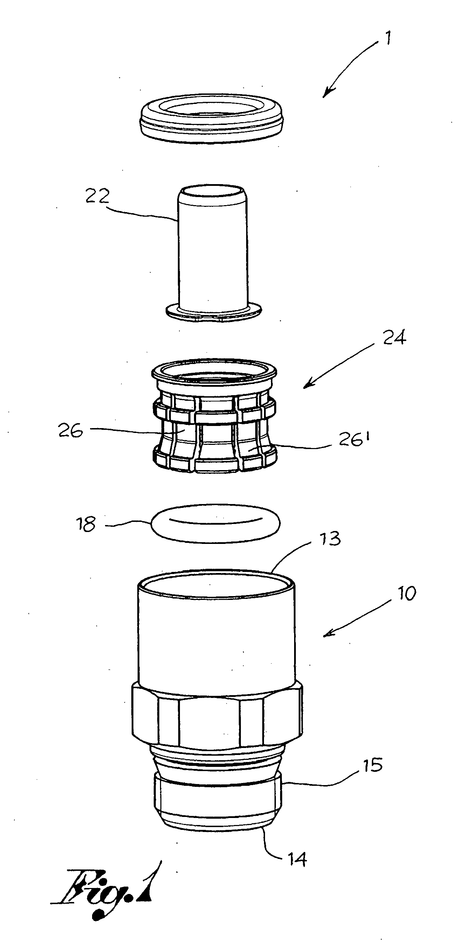

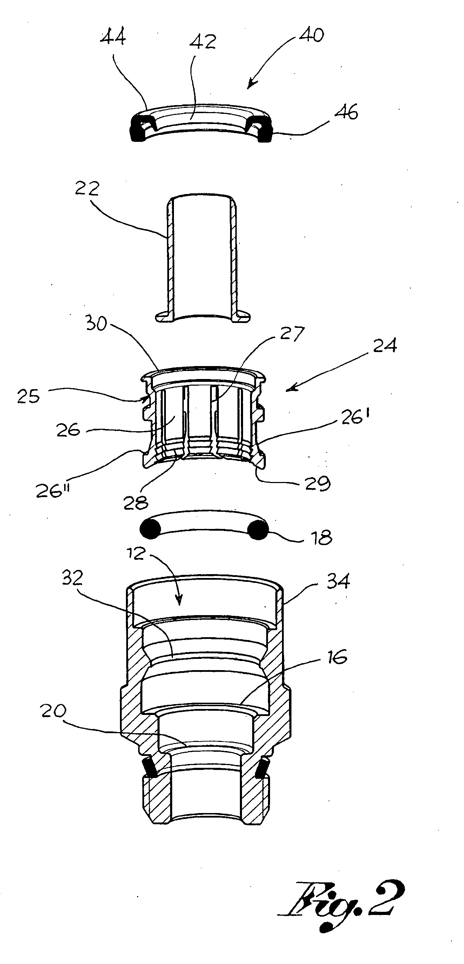

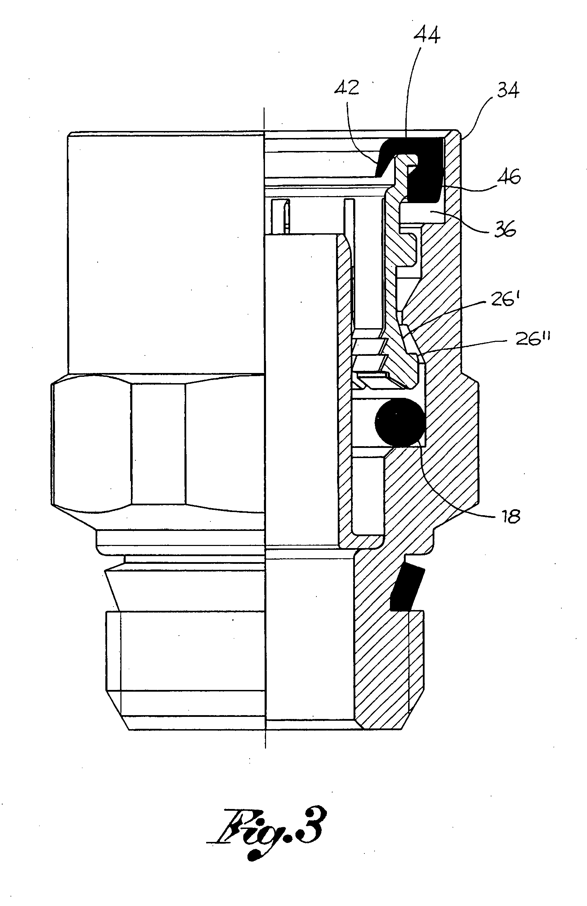

With reference to the figures 1-5, by 1 has been indicated a rapid fitting not according to the invention as a whole, in a first embodiment, typical of a brass fitting. The fitting 1 is suitable for fluidically connecting a pipe 2 to a fluid header body - not shown.

The fitting 1 comprises an external body 10 which develops axially between an inlet extremity 13, in which the pipe 2 is inserted, and an outlet extremity 14, suitable for coupling with the fluid header body. To make this coupling, the outlet extremity 14 has, for example, a threaded portion 15.

The body 10 internally defines an axial cavity 12.

In the body 10 is obtained a first annular shoulder 16 on which rests a seal element, e.g., an O-ring 18.

In accordance with one non-inventive embodiment, in the body 10 is also obtained a second annular shoulder 20 on which rests a reinforcement sleeve 22 for the extremity of the pipe 2 inserted in the fitting 1.

In the body 10 is also housed a gripper element 24 suitable for blocking the extremity of the pipe 2 in the fitting 1.

The gripper element 24 comprises a substantially cylindrical body 25 at an extremity of which is obtained a plurality of gripping teeth 26 identified by cuts 27 directed according to the generating lines of the cylinder. Each of said teeth 26 has a conical outer surface 26' that tends to widen in a radial direction towards the extremity and which terminates with an external edge 26", and pointed portions 28 turned in a radial direction inwards, suitable for interacting with the outer surface of the pipe 2. Each tooth 26 also terminates with a flared extremity surface 29 suitable for interacting with the seal element 18, as will be better explained below.

On the opposite side with respect to the teeth 26, the body 25 of the gripper element terminates with a terminal edge 30, e.g., a flanged edge.

Internally, the body 10 of the fitting 1 also has an annular projection 32, e.g., with conical surface, protruding in a radial direction towards the inside and suitable for interacting with the outer edge 26" of the teeth 26, when the element is in a blocked position, as will be illustrated below.

Normally, the gripper element 24 is in an idle position, in which the gripping teeth 26 are further on (with respect to the direction of pipe insertion) than the annular projection 32 of the body 10. The pipe, advancing in the gripper element 24, widens the teeth 26 and stops up against the edge of the reinforcement sleeve 22 which is rested on the second shoulder 20.

A simple retraction of the pipe and/or the establishment of the pressure of the fluid inside the fitting cause the pipe 2 to retract and therefore an interaction of the pointed portions 28 of the teeth 26 with the pipe surface. The gripper element 24 also therefore tends to retract, until the annular projection 32 in the body 10 engages the outer edge 26" of the teeth 26, pushing them in a radial direction and further forcing them to crimp the pipe. In this position, the pipe 2 remains firmly inserted in the fitting.

The fitting 1 also comprises an annular protection element 40 fitted over the terminal edge 30 of the gripper element 24.

Such annular protection element 40 comprises an inner lipped portion 42 that extends in a radial direction towards the inside of the axial cavity 12 so as to interact with the outer surface of the pipe 2, when this is inserted in the fitting.

Furthermore, the outer body 10 comprises a cylindrical terminal portion 34 that extends axially at least until it surrounds, but preferably further, said protection element 40 in such a way that the terminal edge 30 of the gripper element 24, not protruding in an axial direction from the outer body 10, cannot be pressed manually but is only accessible by means of a special tool.

In accordance with one embodiment, the inner lipped portion 42 is sloped in the direction of pipe insertion.

Advantageously, furthermore, said lipped portion 42 is elastically yielding so as to bend following the insertion of the pipe in the fitting. Consequently, such lipped portion can be made in such a way as to have, when idle, an inner diameter less than the outer diameter of the pipe. This ensures there is always a contact between the lipped portion and the outer surface of the pipe.

In accordance with one embodiment, the lipped portion 42 of the protection element extends from a substantially flat intermediate front portion 44 superimposed on the front surface of the terminal edge 30 of the gripper element. By "front" is meant here turned towards the inlet opening of the fitting, and therefore defining a surface perpendicular to the main axis of the fitting.

According to one embodiment, the cylindrical terminal portion 34 of the outer body 10 delimits an annular interspace 36 at least with the terminal edge 30 of the gripper element. The intermediate portion 44 of the protection element 40 connects with an outer appendix 46 (with respect to the gripper element 24) withheld in said annular interspace 36.

Preferably, said outer appendix 46 of the protection element 40 has a substantially polygonal or circular section and is pressure fitted in the annular interspace 36. Consequently, this outer appendix 46, withheld in the interspace 36, gives stability to the protection element 40 and at the same time acts as a seal means to prevent external agents being introduced between the outer body 10 and the gripper element 24.

The protection element 40 therefore has, altogether, an upturned U shape, meaning arched shape, and is arranged astride the terminal edge 30 of the gripper element 24.

Advantageously, furthermore, the lipped portion 42 rests, in its region of fitting to the flat intermediate portion 44, on a bevelled surface 31 of the terminal edge 30.

Advantageously, the annular protection element 40 is made of an elastomer material, natural or synthetic, resistant to oil.

It should be noted that the cylinder body 25 of the gripper element 24 has an inner diameter substantially equal to the outer diameter of the pipe to be inserted in the fitting, except that the terminal edge 30 has a larger diameter to offset the presence of the radial lip.

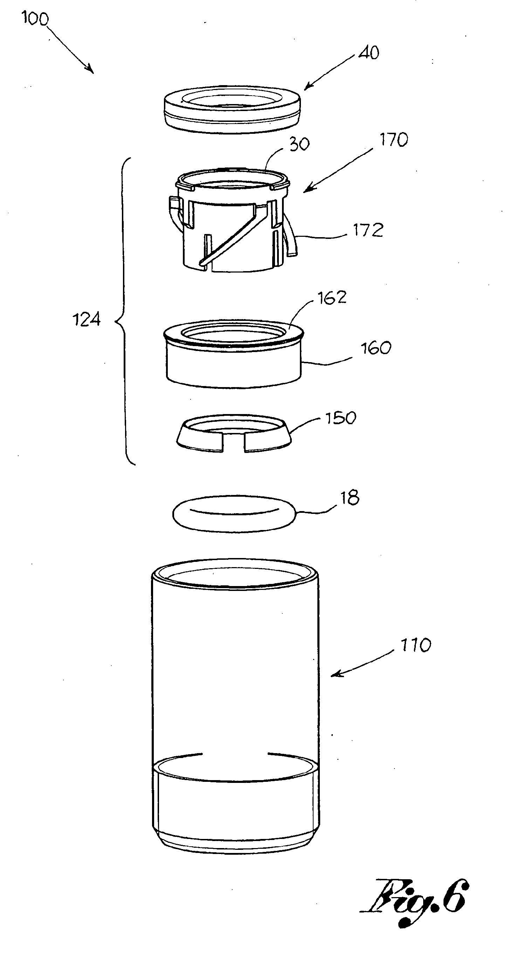

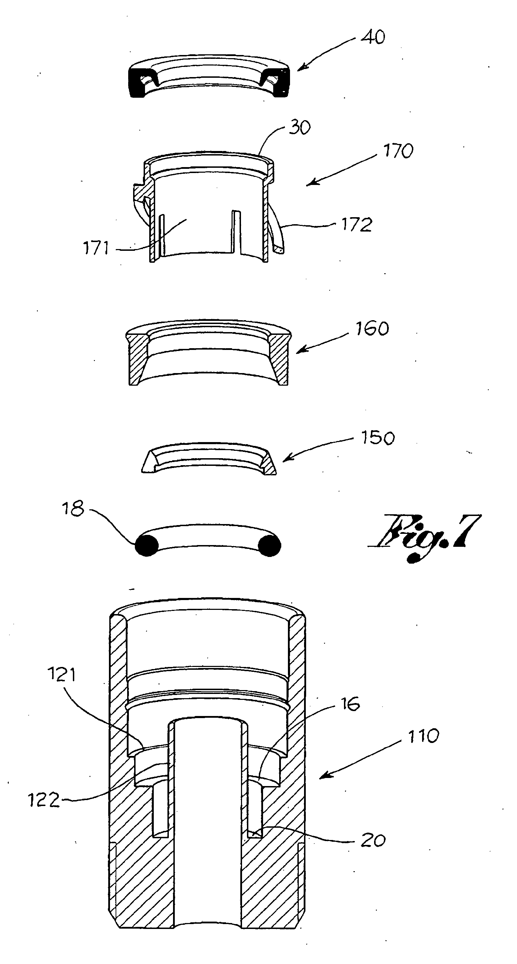

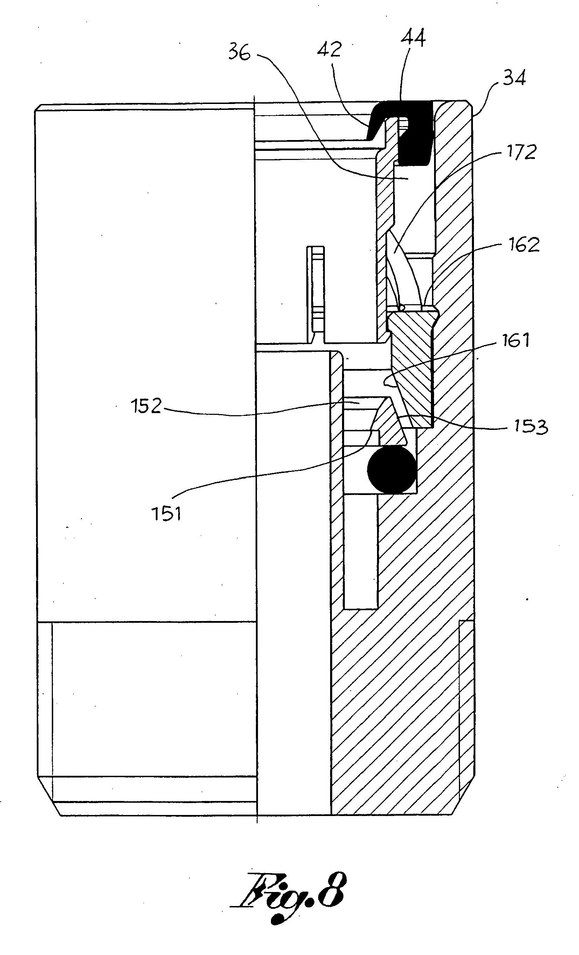

The inventive fitting 100 shown in the figures 6-10 substantially differs from the previously described embodiment as regards the structure of the gripper element. The inventive embodiment described below is normally used for quick fittings or super quick fittings made of plastic material, e.g., in technopolymer.

The parts of the fitting 100 common to the first embodiment have been indicated by the same numerical references.

The fitting 100 has a gripper element 124 that comprises an elastic lock ring 150 for locking the pipe 2, resting on the seal element 18. This elastic ring 150 has at least a pointed inner portion 151 suitable for interacting with the outer surface of the pipe, a conical inner surface 152 diverging towards the opening of the fitting with respect to said outer surface of the pipe, and a conical outer surface 153 opposite the conical inner surface. In other words, the elastic lock ring has a substantially triangular section. In agreement with one embodiment, the lock ring is made of metal material and its elasticity is given by an interruption of its circumference.

The gripper element 124 also comprises a counter ring 160 resting on an annular shoulder 121 obtained in the outer body 110, radially more outwards and axially closer to the inlet extremity of the fitting with respect to the shoulders 20 and 16 on which rests the pipe 2 and to the seal element 18, respectively.

This counter ring 160 has a conical inner surface 161 turned towards the conical outer surface 153 of the lock ring 150 arid has the same slope angle as this. In idle position, such conical parallel surfaces remain slightly apart. When, due to the effect of the fluid under pressure and/or an outward traction of the pipe, the lock ring retracts towards the counter ring 160, the two conical surfaces 153 and 161 come into contact and the lock ring further tightens on the pipe and prevents it from being extracted from the fitting.

Finally, the gripper element 124 comprises a substantially cylindrical main body 170 defining the terminal edge 30 of the gripper element on which the protection element 40 is fitted. Said main body 170 has, on the opposite side to the terminal edge 30, a plurality of gripping teeth 171 which, following the forward movement of said body, engage the conical inner surface 152 of the lock ring 150 causing said ring to widen and therefore allowing the pipe 2 to be extracted.

In accordance with one embodiment, the main body 170 of the gripper element 124 rests elastically on a front surface 162 of the counter ring 160 so it is movable in an axial direction with respect to this and can return to retracted position when the action on it is interrupted. For example, the body 170 rests on the counter ring 160 by means of a plurality of flexible fins 172 which extend in a helical pattern along the outer surface of the body 170.

Finally, it must be noted that in this embodiment, the reinforcement sleeve 122 of the pipe 22 is made all in one piece with the outer body 110.

Part of the present invention is also a tool 60 suitable for exercising a localised pressure on the flat intermediate portion 44 of the protection element 40 to cause the gripper element 24, 124 to move forwards.

In accordance with one embodiment, such tool 60 is suitable for being slidingly coupled with pipe 2. For example, the tool 60 has a C-shaped cross section for being geometrically coupled in a removable way with the pipe 2.

The tool 60 comprises a portion of flanged head 61, suitable for being engaged manually by an operator, and a collar 62 that extends from said head portion 61 and which, when the tool 60 is associated with the pipe 2, adheres to this and is turned towards the fitting.

The collar 62 has a thickness substantially equal to that of the intermediate portion 44 of the protection element 40 so that, when the tool is pushed into contact with the fitting, the collar only acts on the intermediate portion 44 and not on the outer portion 46 or on the outer body 10, 110.

The tool 60 therefore acts as an adapter or reducer element to concentrate the force that can be exercised by an operator on the head portion 60 on a circumference, or in any case on an annular surface with thickness substantially equal to that of the intermediate portion 44.

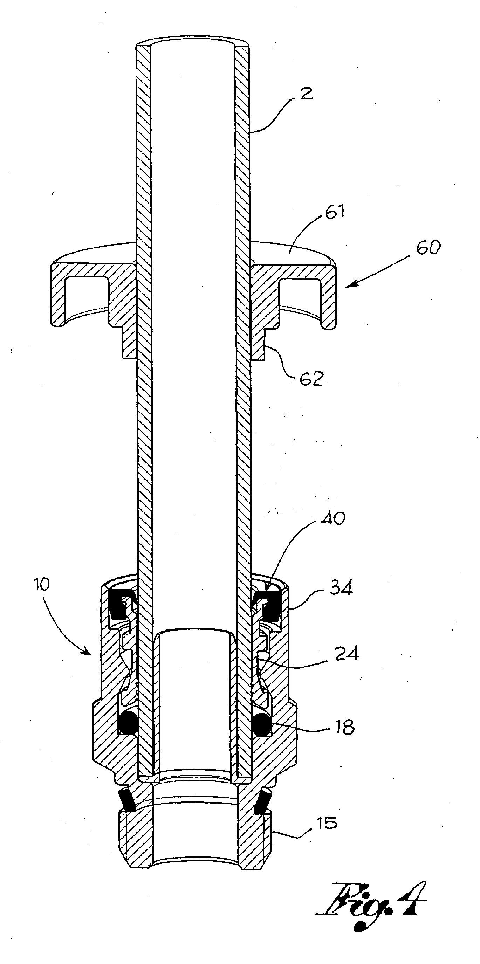

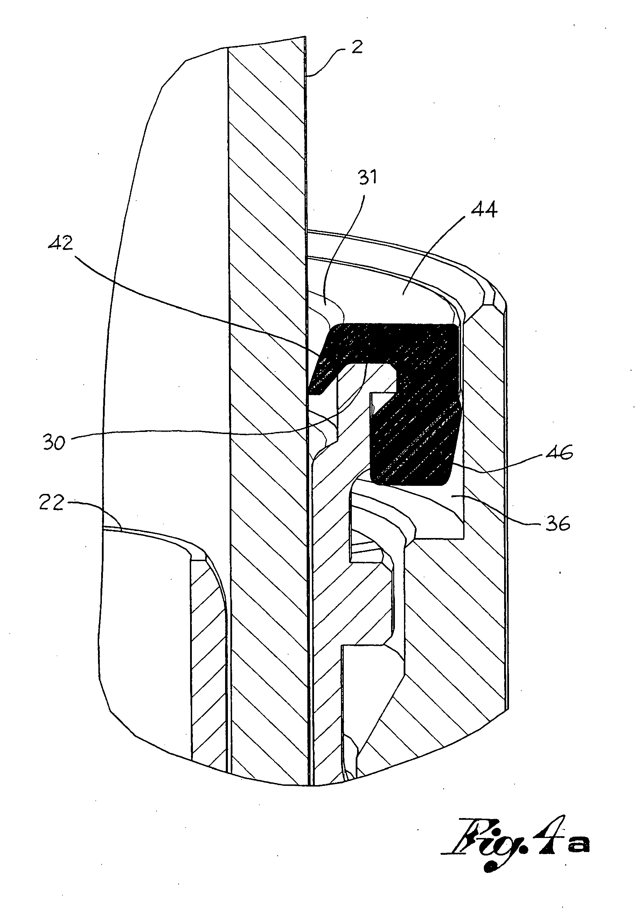

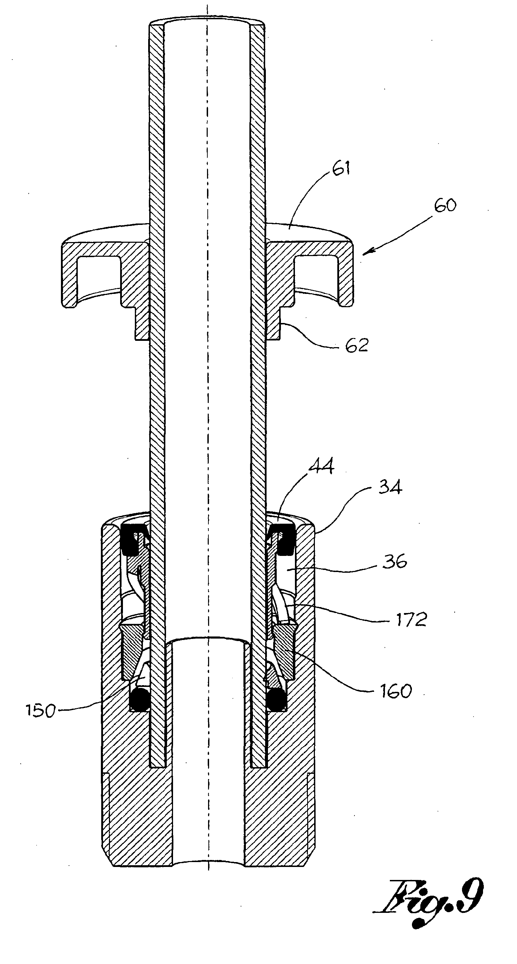

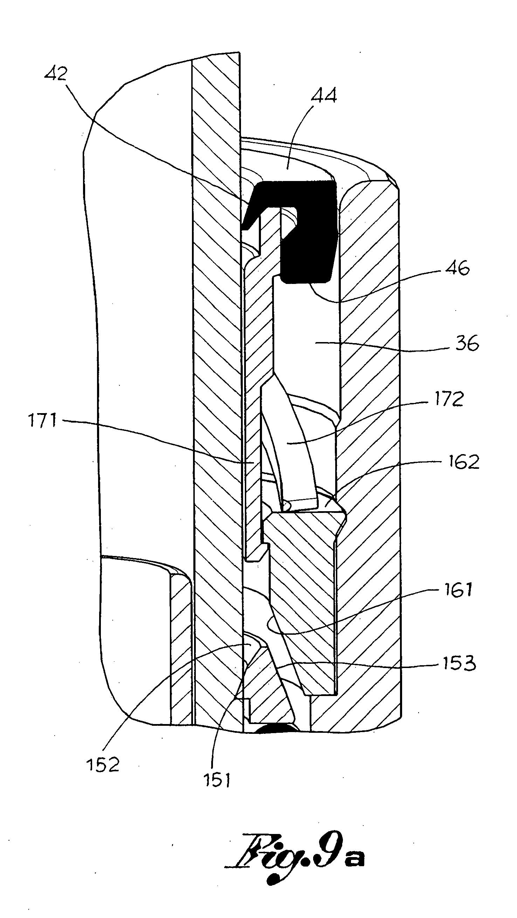

The figures 4, 9 show the fitting 1 with the tool 60 connected to the pipe 2 but positioned away from the protection element 40.

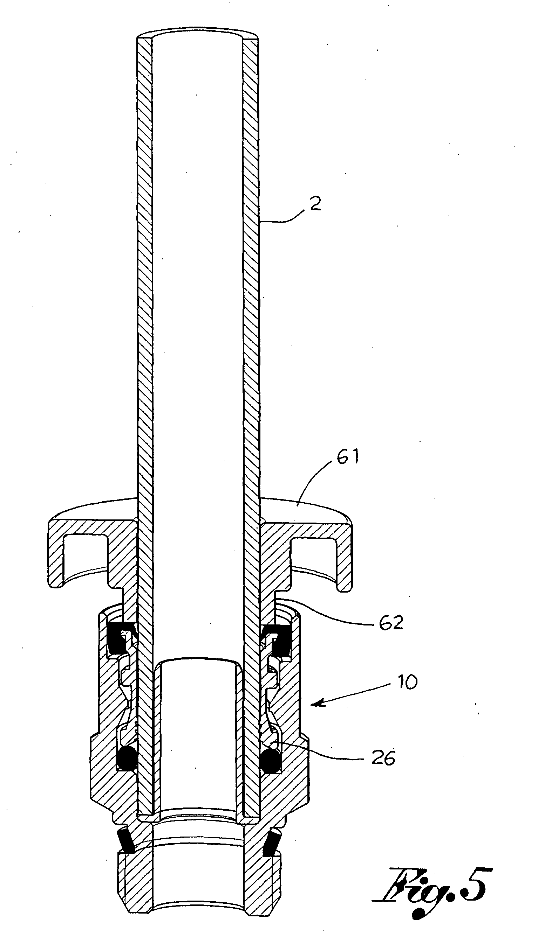

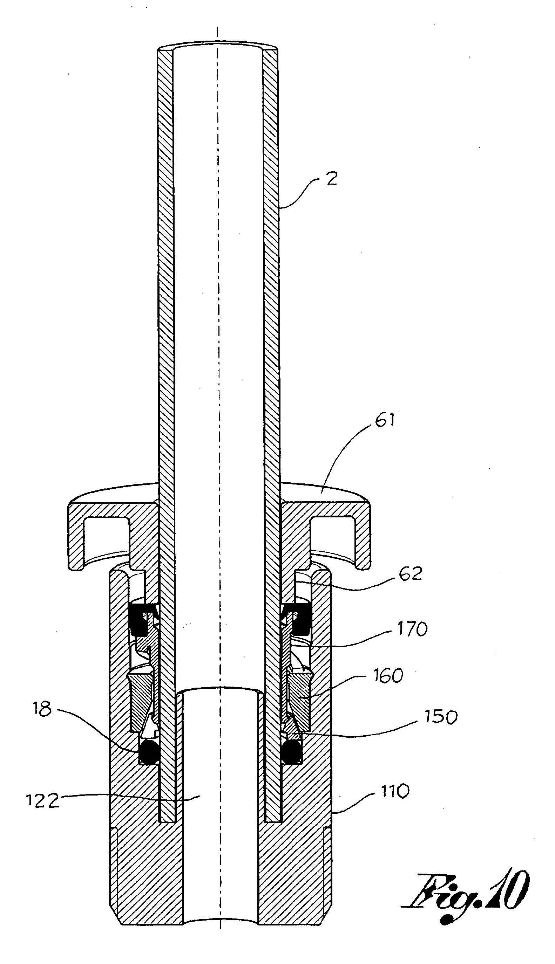

The figures 5, 10 show the tool 60 in pressure on the intermediate portion 44 of the gripper element. As was said above, in this condition an operator is able to act, with the tool 60, on the terminal edge 30 of the gripper element 24, 124, pushing it in an advance pipe release position.

It should be noted that this operation substantially calls from the operator for the same force which a direct action would require on the gripper element of a traditional fitting.

The lipped portion 42 of the protection element 40 successfully acts as protection against dirt, dust, oil and other external agents that could introduce themselves into the fitting.

In fact, if, during system use, dirt or other external agents deposit on the fitting or on the outer surface of the pipe, the lipped portion of the protection element, by coming into contact with the outer surface of the pipe, stops these external agents and prevents them from being introduced into the body of the fitting and, in particular, preserves the integrity of the seal element 18.

## Claims

1. Fitting (100) comprising an outer body (110) and a gripper element (124) housed in an axial cavity of said body and suitable for blocking the extremity of a pipe (2) inside said cavity, where the gripper element is movable between a retracted locked pipe position and a forward released pipe position, and where the gripper element comprises a terminal edge (30) on which can be exercised an axial force to move the gripper into forward released position, wherein on said terminal edge is fitted an annular protection element (40) comprising an inner lipped portion (42) which extends in a radial direction towards the inside of the axial cavity so as to interact with the outer surface of the pipe, and in that said outer body comprises in one piece a cylindrical terminal portion (34) which extends in an axial direction at least until it surrounds said protection element (40) in such a way that the terminal edge (30) of the gripper element (124) does not protrude in the axial direction from the outer body (10), **characterised in that** the gripper element (124) comprises:
- an elastic lock ring (150) having at least a pointed inner portion (151) suitable for interacting with the outer surface of the pipe, a conical inner surface (152) diverging with respect to said outer surface of the pipe and a conical outer surface (153) opposite the conical inner surface;
- a counter ring (160) resting on an annular shoulder (121) of the outer body, said counter ring having a conical inner surface (161) turned towards and suitable for cooperating with the conical outer surface of the lock ring so as to press said ring in a radial direction against the pipe; and
- a substantially cylindrical main body (170) defining the terminal edge (30) of the gripper element and having, from the part opposite said edge, a plurality of gripping teeth (171) which, following the forward movement of said body, engage the conical inner surface of the lock ring causing said ring to widen.

2. Fitting according to claim 1, in which said lipped portion (42) is angled in the direction of pipe insertion.

3. Fitting according to claims 1 or 2, in which said lipped portion (42) is elastically yielding so it bends following the insertion of the pipe in the fitting.

4. Fitting according to any of the claims 1-3, in which the lipped portion of the protection element extends from a substantially flat intermediate front portion (44) superimposed on the front surface of the terminal edge of the gripper element.

5. Fitting according to any of the claims 1-4, in which the cylindrical terminal element (34) of the outer body delimits an annular interspace (36) at least with the terminal edge of the gripper element.

6. Fitting according to claim 5, in which the intermediate portion of the protection element connects up with an outer appendix (46) withheld in said annular interspace.

7. Fitting according to claim 6, in which said outer appendix (46) of the protection element has a substantially polygonal or circular section and is pressure fitted in the annular interspace.

8. Fitting according to any of the previous claims, in which the protection element (40) has an overturned U shape and is arranged astride the terminal edge (30) of the gripper element.

9. Fitting according to any of the previous claims, in which the annular protection element (40) is made of a natural or synthetic elastomer material.

10. Fitting according to any of the previous claims, in which the gripper element (124) comprises a substantially cylindrical body having an inner diameter substantially equal to the outer diameter of the pipe to be inserted in the fitting, except for the terminal edge which has a bigger inner diameter so as to offset the presence of the lipped portion (42).

11. Fitting according to any of the previous claims, in which the main body (170) of the gripper element rests elastically on a front surface of the counter ring (160) so it is movable in an axial direction with respect to the counter ring.

12. Fitting according to any of the previous claims, also comprising a release tool (60) suitable for being slidingly coupled with the pipe.

13. Fitting according to claim 12, in which said tool (60) has a C-shaped cross section for coupling geometrically and in a removable way with the pipe.

14. Fitting according to claim 12 or 13, in which the release tool (60) comprises a portion of flanged head (61), suitable for being engaged manually by an operator, and a collar (62) extending from said head (61) and which, when the tool (60) is associated with the pipe, adheres to the pipe and is turned towards the fitting, said collar (62) having a thickness substantially equal to that of the intermediate portion (44) of the annular protection element (40).

## Patentansprüche

1. Fitting (100) umfassend einen äußeren Körper (110) und ein Greifelement (124), das in einem axialen Hohlraum des Körpers aufgenommen ist und zum Festsetzen des Endes eines Rohres (2) in dem Hohlraum geeignet ist, wobei das Greifelement zwischen einer zurückgezogenen Rohrverriegelungsposition und einer vorgeschobenen Rohrlöseposition beweglich ist, und wobei das Greifelement eine Abschlusskante (30) umfasst, auf die eine axiale Kraft ausübbar ist, um das Greifelement in die vorgeschobene Löseposition zu bewegen, wobei an der Abschlusskante ein ringförmiges Schutzelement (40) angebracht ist, das einen inneren Lippenabschnitt (42) umfasst, der sich in einer radialen Richtung zur Innenseite des axialen Hohlraums derart erstreckt, dass er mit einer äußeren Fläche des Rohres zusammenwirkt, und in dem der äußere Körper einstückig einen zylindrischen Abschlussabschnitt (34) umfasst, der sich in axialer Richtung so weit erstreckt, dass er wenigstens das Schutzelement (40) derart umgibt, dass die Abschlusskante (30) des Greifelements (124) nicht in axialer Richtung von dem äußeren Körper (10) vorragt,
**dadurch gekennzeichnet**,
dass das Greifelement (124) Folgendes umfasst:
- einen elastischen Verriegelungsring (150), der wenigstens einen zum Zusammenwirken mit der Außenfläche des Rohres geeigneten spitzzulaufenden inneren Abschnitt (151), eine konische Innenfläche (152), die sich von der Außenfläche des Rohres weg erstreckt, und eine konische Außenfläche (153), die der konischen Innenfläche gegenüberliegt, aufweist,
- einen Gegenring (160), der an einer ringförmigen Schulter (121) des äußeren Körpers anliegt, wobei der Gegenring eine konische Innenfläche (161) aufweist, die der konischen Außenfläche des Verriegelungsrings zugewandt ist und zum derartigen Zusammenwirken mit dieser geeignet ist, dass der Ring in einer radialen Richtung gegen das Rohr gedrückt wird, und
- einen im Wesentlichen zylindrischen Hauptkörper (170), der die Abschlusskante (30) des Greifelements bildet und an dem Abschnitt, der der Kante gegenüberliegt, eine Mehrzahl von Greifzähnen (171) aufweist, die im Verlauf der Vorwärtsbewegung des Körpers in die konische Innenfläche des Verriegelungsrings eingreifen und ein Aufweiten des Ringes veranlassen.

2. Fitting gemäß Anspruch 1, wobei der Lippenabschnitt (42) in Richtung des Einführens des Rohres abgewinkelt ist.

3. Fitting gemäß Anspruch 1 oder 2, wobei der Lippenabschnitt (42) elastisch nachgibt, so dass er sich infolge des Einführens des Rohres in das Fitting biegt.

4. Fitting gemäß irgend einem der Ansprüche 1 bis 3, wobei der Lippenabschnitt des Schutzelements sich von einem im Wesentlichen ebenen vorderen Zwischenabschnitt (44), der auf der Vorderfläche der Abschlusskante des Greifelements angeordnet ist, erstreckt.

5. Fitting gemäß irgend einem der Ansprüche 1 bis 4, wobei das zylindrische Abschlusselement (34) des äußeren Körpers einen ringförmigen Zwischenraum (36) wenigstens mit der Abschlusskante des Greifelements begrenzt.

6. Fitting gemäß Anspruch 5, wobei sich der Zwischenabschnitt des Schutzelements mit einem äußeren Fortsatz (46), der in dem ringförmigen Zwischenraum zurückgehalten ist, verbindet.

7. Fitting gemäß Anspruch 6, wobei der äußere Fortsatz (46) des Schutzelements einen im Wesentlichen polygonalen oder kreisförmigen Querschnitt aufweist und in dem ringförmigen Zwischenraum eingepresst befestigt ist.

8. Fitting gemäß irgend einem der vorangehenden Ansprüche, wobei das Schutzelement (40) eine umgedrehte U-Form aufweist und rittlings auf der Abschlusskante (30) des Greifelements angeordnet ist.

9. Fitting gemäß irgend einem der vorangehenden Ansprüche, wobei das ringförmige Schutzelement (40) aus einem natürlichen oder synthetischen Elastomerwerkstoff hergestellt ist.

10. Fitting gemäß irgend einem der vorangehenden Ansprüche, wobei das Greifelement (124) einen im Wesentlichen zylindrischen Körper aufweist, der einen Innendurchmesser im Wesentlichen gleich dem äußeren Durchmesser des in das Fitting einzuführenden Rohres aufweist, mit Ausnahme der Abschlusskante, die einen derartig größeren Innendurchmesser aufweist, dass der Lippenabschnitt (42) versetzt angeordnet ist.

11. Fitting gemäß irgend einem der vorangehenden Ansprüche, wobei der Hauptkörper (170) des Greifelements elastisch auf einer vorderen Fläche des Gegenrings (160) aufliegt, so dass er in einer axialen Richtung bezüglich des Gegenrings beweglich ist.

12. Fitting gemäß irgend einem der vorangehenden Ansprüche, ferner umfassend ein Lösewerkzeug (60), das zum gleitenden Verbinden mit dem Rohr geeignet ist.

13. Fitting gemäß Anspruch 12, wobei das Werkzeug (60) einen C-förmigen Querschnitt zum geometrischen Verbinden mit und zum Lösen von dem Rohr aufweist.

14. Fitting gemäß Anspruch 12 oder 13, wobei das Lösewerkzeug (60) einen Abschnitt eines Kopfes (61) mit Flansch aufweist, der zum manuellen In-Eingriff-Bringen durch eine Bedienungsperson geeignet ist, und einen Kragen (62) umfasst, der sich von dem Kopf (61) erstreckt und der, wenn das Werkzeug (60) mit dem Rohr verbunden ist, an dem Rohr haftet und zu dem Fitting gedreht wird, und wobei der Kragen (62) eine Dicke aufweist, die im Wesentlichen gleich dem Zwischenabschnitt (44) des ringförmigen Schutzelements (40) ist.

## Revendications

1. Raccord (100) comprenant un corps extérieur (110) et un élément de saisie (124) logé dans une cavité axiale dudit corps et approprié pour bloquer l'extrémité d'un tuyau (2) à l'intérieur de ladite cavité, où l'élément de saisie est mobile entre une position tuyau bloqué rétractée et une position tuyau libéré avancée, et où l'élément de saisie comprend un bord terminal (30) sur lequel peut être exercée une force axiale pour déplacer l'élément de saisie dans la position libérée avancée, dans lequel sur ledit bord terminal est raccordé un élément de protection annulaire (40) comprenant une partie à rebord intérieur (42) qui s'étend dans une direction radiale vers l'intérieur de la cavité axiale de manière à entrer en interaction avec la surface extérieure du tuyau, et en ce que ledit corps extérieur comprend d'un seul tenant une partie terminale cylindrique (34) qui s'étend dans une direction axiale au moins jusqu'à ce qu'elle entoure ledit élément de protection (40) d'une manière telle que le bord terminal (30) de l'élément de saisie (124) ne fait pas saillie dans la direction axiale depuis le corps extérieur (10), **caractérisé en ce que** l'élément de saisie (124) comprend :
- une bague de blocage élastique (150) possédant au moins une partie intérieure pointure (151) appropriée pour entrer en interaction avec la surface extérieure du tuyau, une surface conique intérieure (152) divergeant par rapport à ladite surface extérieure du tuyau et une surface conique extérieure (153) opposée à la surface conique intérieure ;
- une bague homologue (160) reposant sur un épaulement annulaire (121) du corps extérieur, ladite bague homologue comportant une surface conique intérieure (161) tournée vers et appropriée pour coopérer avec la surface conique extérieure de la bague de blocage de manière à presser ladite bague dans une direction radiale contre le tuyau ; et
- un corps principal sensiblement cylindrique (170) délimitant le bord terminal (30) de l'élément de saisie et possédant, depuis la partie opposée audit bord, une pluralité de dents de saisie (171) qui, à la suite du déplacement vers l'avant dudit corps, entrent en prise avec la surface conique intérieure de la bague de blocage, entraînant l'élargissement de ladite bague.

2. Raccord selon la revendication 1, dans lequel ladite partie à rebord (42) est inclinée dans la direction d'introduction du tuyau.

3. Raccord selon la revendication 1 ou 2, dans lequel ladite partie à rebord (42) se déforme élastiquement, ainsi elle se plie à la suite de l'introduction du tuyau dans le raccord.

4. Raccord selon l'une quelconque des revendications 1 à 3, dans lequel la partie à rebord de l'élément de protection s'étend depuis une partie avant intermédiaire sensiblement plate (44) à superposée sur la surface avant du bord terminal de l'élément de saisie.

5. Raccord selon l'une quelconque des revendications 1 à 4, dans lequel l'élément terminal cylindrique (34) du corps extérieur délimite un espace intermédiaire annulaire (36) au moins avec le bord terminal de l'élément de saisie.

6. Raccord selon la revendication 5, dans lequel la partie intermédiaire de l'élément de protection est reliée à un appendice extérieur (46) retenu dans ledit espace intermédiaire annulaire.

7. Raccord selon la revendication 6, dans lequel ledit appendice extérieur (46) de l'élément de protection a une section sensiblement polygonale ou circulaire et est ajusté par pression dans l'espace intermédiaire annulaire.

8. Raccord selon l'une quelconque des revendications précédentes, dans lequel l'élément de protection (40) a une forme de U retourné et est agencé à cheval sur le bord terminal (30) de l'élément de saisie.

9. Raccord selon l'une quelconque des revendications précédentes, dans lequel l'élément de protection annulaire (40) se compose d'un matériau élastomère naturel ou synthétique.

10. Raccord selon l'une quelconque des revendications précédentes, dans lequel l'élément de saisie (124) comprend un corps sensiblement cylindrique ayant un diamètre intérieur sensiblement égal au diamètre extérieur du tuyau à introduire dans le raccord, à l'exception du bord terminal qui a un diamètre intérieur plus grand de manière à compenser la présence de la partie à rebord (42).

11. Raccord selon l'une quelconque des revendications précédentes, dans lequel le corps principal (170) de l'élément de saisie repose élastiquement sur une surface avant de la bague homologue (160), ainsi il est mobile dans une direction axiale par rapport à la bague homologue.

12. Raccord selon l'une quelconque des revendications précédentes, comprenant également un outil de libération (60) approprié pour être accouplé coulissant au tuyau.

13. Raccord selon la revendication 12, dans lequel ledit outil (60) a une coupe transversale en forme de C pour s'accoupler de façon géométrique et de manière amovible au tuyau.

14. Raccord selon la revendication 12 ou 13, dans lequel l'outil de libération (60) comprend une partie de tête à bride (61), appropriée pour être entrée manuellement en prise par un opérateur, et un collier (62) s'étendant depuis ladite tête (61) et qui, quand l'outil (60) est associé au tuyau, adhère au tuyau et est tourné vers le raccord, ledit collier (62) ayant une épaisseur sensiblement égale à celle de la partie intermédiaire (44) de l'élément de protection annulaire (40) .
